# EUROPÄISCHE PATENTSCHRIFT

(11) **EP 0 975 914 B1**
(45) Veröffentlichungstag und Bekanntmachung des Hinweises auf die Patenterteilung: **05.06.2002**
(21) Anmeldenummer: 98965816.6
(22) Anmeldetag: 12.12.1998
(51) Int. Cl.: F16L 41/14, F16L 47/00

(54) **VERSCHRAUBBARER ABZWEIG FÜR DÜNNWANDIGE KANALROHRE**
THREADED BRANCHING FOR THIN-WALLED CHANNEL PIPES
DERIVATION VISSABLE POUR TUYAUX A REGARD A FINE PAROI

(30) Priorität: 17.12.1997 DE 19756025
(43) Veröffentlichungstag der Anmeldung: 02.02.2000
(73) Patentinhaber: Funke Kunststoffe GmbH, 48324 Sendenhorst (DE)
(72) Erfinder: FUNKE, Hans-Günter, D-48324 Sendenhorst (DE); FUNKE, Norbert, D-48324 Sendenhorst (DE)
(74) Vertreter: Hoffmeister, Helmut, Dr. Dipl.-Phys.
(86) Internationale Anmeldenummer: EP9808109
(87) Internationale Veröffentlichungsnummer: WO9931428

(56) Entgegenhaltungen:
- GB-A- 951 823
- GB-A- 1 151 402
- GB-A- 1 269 499
- GB-A- 1 576 038
- US-A- 1 542 645

## Beschreibung

Die Erfindung betrifft eine Vorrichtung zum dichtschließenden Verbinden eines Kanalrohres mit einem Anschlußrohr, in das eine Abzweigöffnung einzubringen ist, die aufweist,
- ein Innenteil mit wenigstens einem Gewinde und einem in das Kanalrohr ragenden umlaufenden Bund, wobei das Innenteil mit dem Bund voran in der Abzweigöffnung zu positionieren ist
- einen Auflagering mit einem einer Kontur einer Kanalrohraußenfläche angepaßten Auflageflansch,
- ein Einsatzstück mit
   einem auf seiner Außenfläche wenigstens teilweise angeordnetenen Einschraubaußengewinde und
   einem Spannkranz, wobei das Einsatzstück wenigstens teilweise in das Innenteil einzuschrauben ist, und
- ein Ringdichtungselement, das von dem Auflageflansch des Auflagerings und dem umlaufenden Bund wenigstens teilweise gegen eine Kanalrohrinnenfläche und wenigstens teilweise gegen eine Öffnungsfäche der Abzweigöffnung gedrückt ist.

Eine Vorrichtung der eingangs genannten Art ist aus der GB-A-2 120 340 bekannt. Sie besteht aus einem Innenteil, einem Auflagering und einem Einsatzstück. In das Innenteil ist ein Gewinde eingebracht. An dem Innenteil ist ein umlaufender Bund angeordnet. Das Innenteil ist mit einem durchgehenden Schlitz versehen. Der Auflagering weist einen einer Kontur einer Kanalrohrfläche angepaßten Auflageflansch auf.

Das Einsatzstück ist ein Rohrkörper, der von einem Spannkranz umgeben ist. Unterhalb des Spannkranzes ist auf dem Rohrkörper ein Einschraubgewinde angeordnet.

Für eine Montage wird in ein Kanalrohr eine Abzweigöffnung eingebracht. Danach wird das Innenteil am Schlitz aufgebogen, in die Abzweigöffnung gedreht und in ihr hochgezogen. Hierbei legt sich der Bund gegen die Kanalrohrinnenfläche. Danach wird der Auflagering über das Einsatzstück geschoben und das Einsatzstück in das Innenteil eingeschraubt. Beim Einschrauben drückt der Spannkranz auf den Auflagering und spannt die Kanalrohrwand zwischen dem Auflageflansch und dem Bund ein.

Nachteilig ist, daß das Innenteil geschlitzt ist. Beim Einsetzen in die Abzweigöffnung läßt sich dadurch das vergrößerte Innenteil schwer handhaben. Im montierten Zustand bleibt der Schlitz ständig offen und dichtet den Abzweig nicht in der Abzweigöffnung ab. Deshalb kann eine einzige Ringdichtung erst zwischen Spannkranz und Auflagering eingelegt werden. Ein weiterer Nachteil besteht darin, daß durch die Art der Verschraubung der Einsatz auf bestimmte Kanalrohrwanddicken und einen Außendurchmesser eines Anschlußrohrs beschränkt bleibt.

Aus der US-A-1 542 645 ist ein Abzweigstutzen bekannt, der aus einem Einsatzstück mit einem umlaufenden Bund, einem teilweise umlaufenden Außengewinde und einem Innengewinde aufweist. Mit einer Unterlegscheibe wird das Einsatzstück mit Hilfe einer Kappe und eines Rings in eine Ausnehmung eines Rohrs verschraubt. In das Einsatzstück wird dann ein Anschlußrohr eingeschraubt.

Nachteilig ist, daß das Anschlußstück und die Unterlegscheibe mit Hilfe einer Schnur zur Rohrausnehmung gezogen werden muß. Anschließend muß das Anschlußstück mit viel Mühe und unter Zurhilfenahme weiterer Werkzeuge in die Rohrausnehmung eingesetzt werden.

Aus der GB-A-951 823 ist ein Abzweigstutzen bekannt, der ebenfalls ein einteiliges Einsatzstück aufweist. Um das Einsatzstück in die Rohrausnehmung einsetzen zu können, ist ein Bund vorgesehen, der an zwei gegenüberliegenden Seiten bis an den Bund abgeflacht ist. Dadurch, daß kein umlaufender Bund vorhanden ist, muß ein Dichtungsring auf die Rohraußenfläche aufgelegt und beim Verschrauben verpreßt werden.

Aus der DE-A-3 446 360 ist ein Kupplungselement zur Gewährleistung der Verbindung zwischen einer Hauptleitung und einer Abzweigleitung bekannt. Sie besteht aus einem Einsatzstück, das mit einem nicht mit Gewinde versehenen Zentralteil in eine Abzweigöffnung einer Kanalrohröffnung eingeschoben wird. Dieses Zentralteil hat einen Innendurchmesser, der kleiner als der der Kanalrohröffnung ist. Zwischen dem Zentralstück und der Öffnung wird eine L-förmige Dichtung eingelegt. Um das Einsatzstück wird ein Spannring gelegt, der auf einen L-Schenkel der Dichtung und der Außenfläche des Kanalrohrs aufliegt und der gegenüber der Außenwand des Einsatzstücks verschiebbar ist. Auf das Außengewinde des Einsatzstücks wird eine Spannmutter geschraubt, die auf dem Spannring aufsitzt.

Nachteilig ist, daß im vormontierten und in die Abzweigöffnung eingesetzten Zustand mit Hilfe eines Heizwerkzeuges das in das Kanalrohr ragende Ende des Einsatzstücks teilweise in
einen umlaufenden Bund umgeformt werden muß, der das Ende des Dichtrings abstützt. Befindet sich die Abzweigöffnung am Rohrende, lassen sich die Heizwerkzeuge und die Anschlußleitungen trotz eines hohen Aufwandes installieren. Befindet sich hingegen die Abzweigöffnung mitten in einem bereits zerlegten Kanalrohr, ist entweder eine separate Zusatzöffnung zu schaffen oder unter Einsatz weiter Hilfsmittel die Heizwerkzeuge im inneren des Kanalrohrs zur Abzweigöffnung zu transportieren und dort zu installieren.

Aus der DE-A-4 244 127 ist ein Abzweigstutzen bekannt, der über eine L-förmig profilierte Ringdichtung mit einer Dichtungslippe verfügt, die in eine Dichtungskammer eingelegt ist. Für ein dichtschließendes Verbinden mit einem Kanalrohr wird der Abzweigstutzen mit der Dichtungskammer voran in die eingebrachte Abzweigöffnung geschoben. Ist die Dichtungskammer bis in das Kanalrohr eingeschoben, wird eine eingestülpte Dichtungslippe freigegeben, der Dichtungsstutzen nach oben gezogen und mit Hilfe eines Spannrings verspannt.

Nachteilig ist, daß dieser Abzweigstutzen nur bei Inlinerrohren einsetzbar ist. An der Innenseite des Kunststoffinliners läßt sich die Dichtungslippe abdichtend festlegen. Der dicke Betonmantels des Inlinerrohrs hingegen sorgt dafür, daß der Abzweigstutzen gespannt in der Abzweigöffnung gehalten wird.

Letztendlich ist aus der DE-U 29 514 881 ein verspannbares Anschlußrohr für ein Kanalrohr bekannt. Um eine dichtschließende Verbindung in einer Abzweigöffnung eines dickwandigen Beton-Kanalrohr herstellen zu können, wird ein dickwandiger Kunststoffzylinderkörper auf seiner Außenfläche wenigstens teilweise mit einer senkrecht verlaufenden Nutausnehmung versehen, in die ein Halterungssteg eines Auflagerings mit einer der Kanalrohroberfläche angepaßten Auflegeflansch sich
verschieben läßt. Außerdem sind auf der Außenfläche des Kunststoffhohlzylinders meanderförmig verlaufende Dichtungshaltekammern angeordnet, in die ein lippenförmiger Dichtungsring eingelegt wird. Hierdurch kann das Anschlußrohr wie ein Korken in die Abzweigöffnung geschoben und dort dichtschließend gehalten werden. Der Auflagering sorgt hierbei nur dafür, daß das Anschlußrohr lagegerecht in der Abzweigöffnung positioniert wird.

Es stellt sich deshalb die Aufgabe, eine Vorrichtung zum dichtschließenden Verbinden eines insbesondere dünnwandigen Kanalrohres mit einem Anschlußrohr der eingangs genannten Art so weiter zu entwickeln, daß sie sich einfach und sicher in eine in das Kanalrohr einzubringende Abzweigöffnung einsetzen läßt.

Erfindungsgemäß wird diese Aufgabe durch die Merkmale des Anspruchs 1 gelöst.

Die mit der Erfindung erzielten Vorteile bestehen insbesondere darin, daß unabhängig von der Nennweite des Kanalrohr für Anschlußrohre den gleichen Querschnitt ein gleich ausgebildeter Abzweigstutzen verwendet werden kann. Die zwischen dem Abzweigstutzen und den Kanalrohren unterschiedlicherNennweiten als Adapter wirkenden Auflagering und Anschlußstutzen sind den Konturen der Außen- und Innenfläche des jeweiligen Kanalrohrs angepaßt.

Von besonderem Vorteil ist die Ausbildung des Anschlußstutzens. Seine Dünnwandigkeit gestattet es, ihn zusammengedrückt in die Abzweigöffnung mit dem Außenflansch hineinzuschieben. Anschließend wird der Anschlußstutzen in der Abzweigöffnung bei eingelegtem Ringdichtungselement nach oben gezogen. Der Anschlußstutzen weist dabei einen solchen Durchmesser auf, der geringfügig kleiner als der Durchmesser der Abzweigöffnung ist, so daß das Ringdichtungselement sich zwischen Öffnungsfläche und Außenfläche des Anschlußstutzens abdichtend pressen läßt. Die Abdichtung zwischen Kanalrohr und dem Anschlußstutzen erfolgt so an der Stelle, an der die Flüssigkeitsbelastung auftritt. Ein besonderer Vorteil der Erfindung besteht darin, daß Spannring und Anschlußstutzen extra gegeneinander verschraubt werden können und anschließend erst der Abzweigstutzen eingeschraubt werden braucht. Der Abzweigstutzen kann bis auf den Verschraubungsteil unterschiedlich ausgebildet und den jeweiligen Anschlußschlußrohren hinsichtlich Außendurchmesser angepaßt werden. Damit sind Kunststoff-, Keramik-, Gußeisenrohre als Anschlußrohre verwendbar. Wesentlich ist, daß von vier Teilen nur eines hierbei entsprechend angepaßt werden muß.

Das Abzweigrohr kann wenigstens teilweise mit einer umlaufenden Dichtungskammer versehen sein, in der ein Anschlußdichtungsring angeordnet ist. Hierdurch entsteht eine flüssigkeitsdichte Verbindung Zwischen Abzweigstutzen und Anschlußstutzen. Beim Anordnen des Anschlußdichtrings in der Dichtungskammer ist der Anschlußdichtring neu und teilweise mit einer äußeren Gleitschicht überzogen.. Ist diese nicht vorhanden, kann der Anschlußdichtring zusätzlich eingefettet werden. Hierdurch wird das Verdrehen des Abzweigstutzens gegenüber dem Anschlußstutzen erleichtert.

Eine weitere zusätzliche flüssigkeitsdichte Verbindung wird dadurch geschaffen, daß der Auflageflansch des Auflagerings wenigstens teilweise mit einer Dichtungsaufnahmeausnehmung versehen ist, in die ein Auflagedichtungsring eingelegt werden kann.

Das Spannrohr kann mit wenigstens einer Spannschlüsselausnehmung versehen ist. Die Spannschlüsselausnehmungen können im Verbindungsbereich zwischen Spannrohr und Abzweigrohr über dem Spaltabstand angeordnet sein. Hierdurch ist der Abzweigstutzen gegenüber dem Anschlußstutzen mit Hilfe eines Spezialwerkzeuges leicht verdrehbar.

Der Abzweigstutzen kann einteilig ausgebildet sein. Hierdurch erhöhen sich seine Festigkeitswerte, die insbesondere beim Verdrehen gegenüber dem Anschlußstutzen von Vorteil sind.

Die Stutzenwanddicke kann zwischen 1 mm und 4 mm betragen. Auf diese Stutzenwanddicke wird noch das Außengewinde aufgeformt. Im Ergebnis ausführlicher und langwieriger Versuche wurde diese Stutzenwanddicke ermittelt, die sowohl ein einfaches Einbringen in die Abzweigöffnung als auch ein sicheres Zusammenschrauben mit dem Abzweigstutzen ermöglicht und sichert.

Der Anschlußrohrstutzen, der Auflagering, der Abzweigstutzen und der Spannring können aus Polyvinylchlorid und/oder einem anderen Kunststoff oder einem dünnwandigen Metall, wie VA-Stahl, hergegestellt sein. Kunststoff als nicht rostendes Material ist hervorragend im Abwasserbereich einsetzbar.

Ein Ausführungsbeispiel der Erfindung ist in der Zeichnung dargestellt und wird im folgenden näher beschrieben.
Es zeigen
- Fig. 1: ein Kanalrohr mit einer Abzweigöffnung, in die eine Vorrichtung zum dichtschließenden Verbinden mit einem Anschlußrohr - verschraubbarer Abzweigeingesetzt ist, in einer teilweise, geschnittenen, schematischen Darstellung,
- Fig. 2: ein Kanalrohr mit einer Abzweigöffnung gemäß Fig. 1 in einer teilweise geschnittenen Darstellung,
- Fig. 3: einen Anschlußstutzen für einen verschraubbaren Abzweig gemäß Fig. 1 in einer schematisch dargestellten Schnittdarstellung,
- Fig. 4: einen Abzweigstutzen für einen verschraubbaren Abzweig gemäß Fig. 1 in einer schematisch dargestell ten Schnittdarstellung,
- Fig. 5: einen Spannring für einen verschraubbaren Abzweig gemäß Fig. 1 in einer schematisch dargestellten Schnittdarstellung,
- Fig. 6: einen Auflagering für einen verschraubbaren Abzweig gemäß Fig. 1 in einer schematisch dargestellten Schnittdarstellung,
- Fig. 7: ein weiteres Kanalrohr mit einer Abzweigöffnung, in die ein verschraubbarer Abzweig eingesetzt ist, in einer teilweise geschnittenen, schematischen Darstellung.

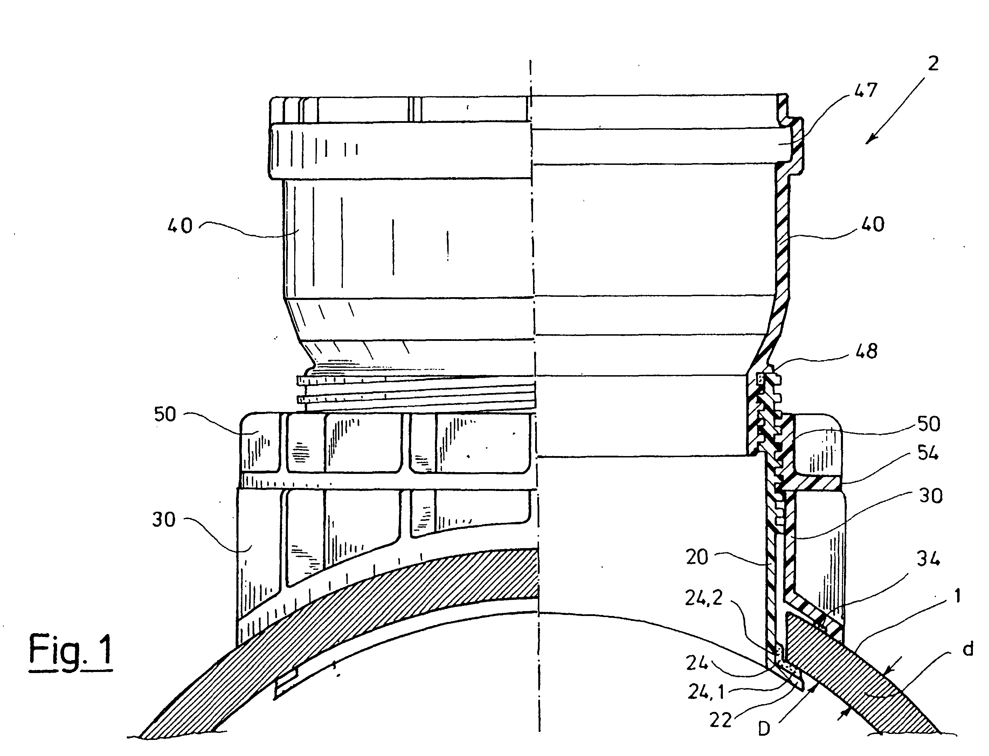

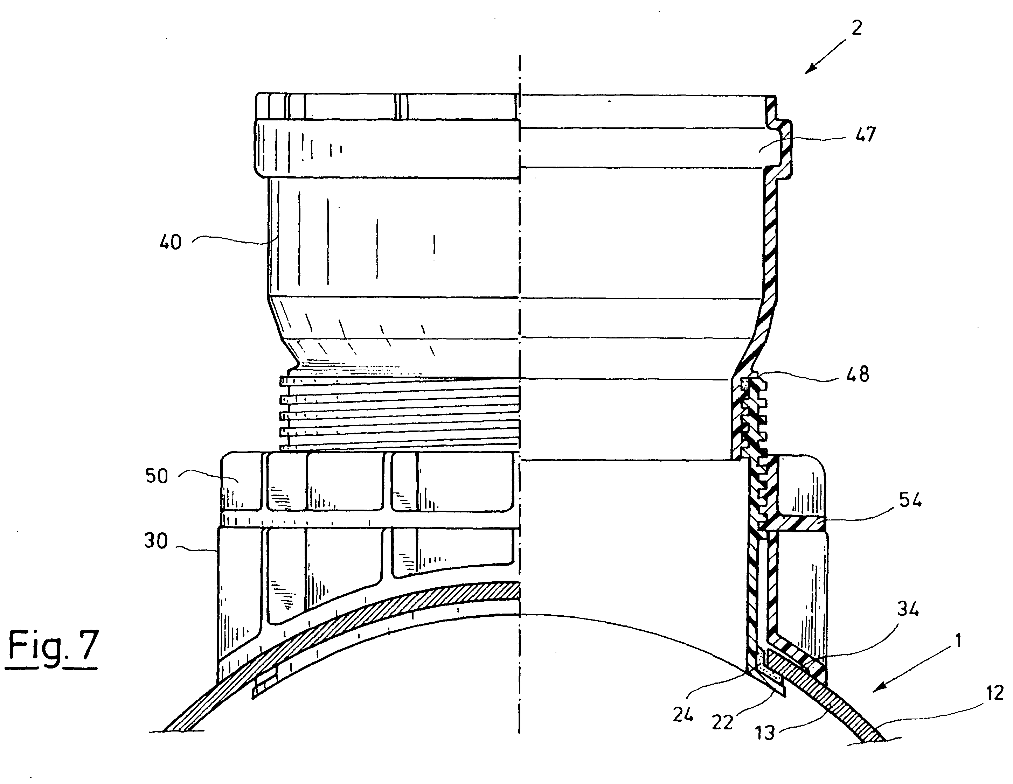

Eine Vorrichtung zum dichtschließenden Verbinden mit einem Anschlußrohr, im folgenden verschraubbarer Abzweig 2 genannt, ist im eingebauten und montierten Zustand in den Figuren 1 und 7 dargestellt. Der verschraubbare Abzweig 2 besteht aus
- einem Anschlußstutzen 20,
- einem Auflagering 30,
- einem Abzweigstutzen 40 und
- einem Spannring 50.

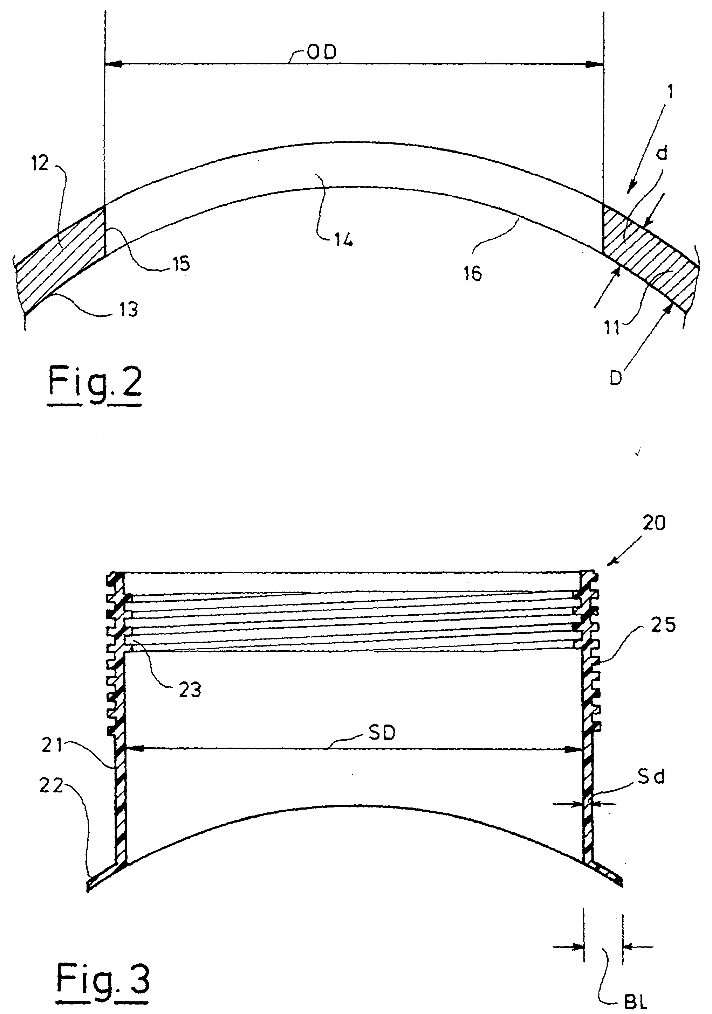

Der Anschlußstutzen 20, wie ihn Figur 3 zeigt, besteht aus einem zylinderförmigen Anschlußstutzenrohr 21, in das ein Stutzenrohrgewinde beziehungsweise auf das ein Spanngewinde angeordnet ist. An das Anschlußstutzenrohr 21 ist ein mit einer Kanalrohrinnenfläche 13 komptatibel umlaufender Außenflansch 22 angeformt. Das Anschlußstutzenrohr hat einen Stutzenrohrdurchmesser SD, der von dem Außendurchmesser des jeweiligen Anschlußrohr bestimmt wird. Darüberhinaus hat das Anschlußstutzenrohr 21 eine Stutzenwanddicke Sd von 1 mm bis 5 mm ohne eingebrachtes beziehungsweise aufgebrachtes Stutzenrohrgewinde 23 oder Spanngewinde 25. Der Außenflansch 22 steht gegenüber der Außenkante des Anschlußstutzenrohr 21 mit einer Bundlänge B1 über. Die Bundlänge B1 beträgt etwa 3 bis 8 mm, vorzugsweise 5 mm. Der Außenflansch 22 und das Ende des Anschlußstutzenrohr 21 in diesem Bereich ist ein Relief zwischen einer Abzweigöffnung 14 im Bereich einer Kanalrohrinnenfläche angepaßt.

Ein Ausschnitt aus einem derartigen dünnwandigen Kanalrohr 1 ist in Figur 2 dargestellt, in das eine Abzweigöffnung 14 eingebracht ist. Das Kanalrohr 1 hat einen Kanalrohrdurchmesser, der mit D bezeichnet ist. Mit 11 ist eine Kanalrohrwand bezeichnet, die eine Kanalrohrwanddicke d hat. Der mit 13 bezeichneten Kanalrohrinnenfläche liegt eine Kanalrohraußenfläche 12 gegenüber. Die Abzweigöffnung 14 weist einen Kanalrohr-Öffnungsdurchmesser auf, der mit OD bezeichnet ist. Die Abzweigöffnung 14 wird von einer Öffnungsfläche 15 begrenzt. Mit 16 ist die bereits beschriebene Kontur der Abzweigöffnung 14 im Bereich der Kanalrohrinnenfläche 13 bezeichnet.

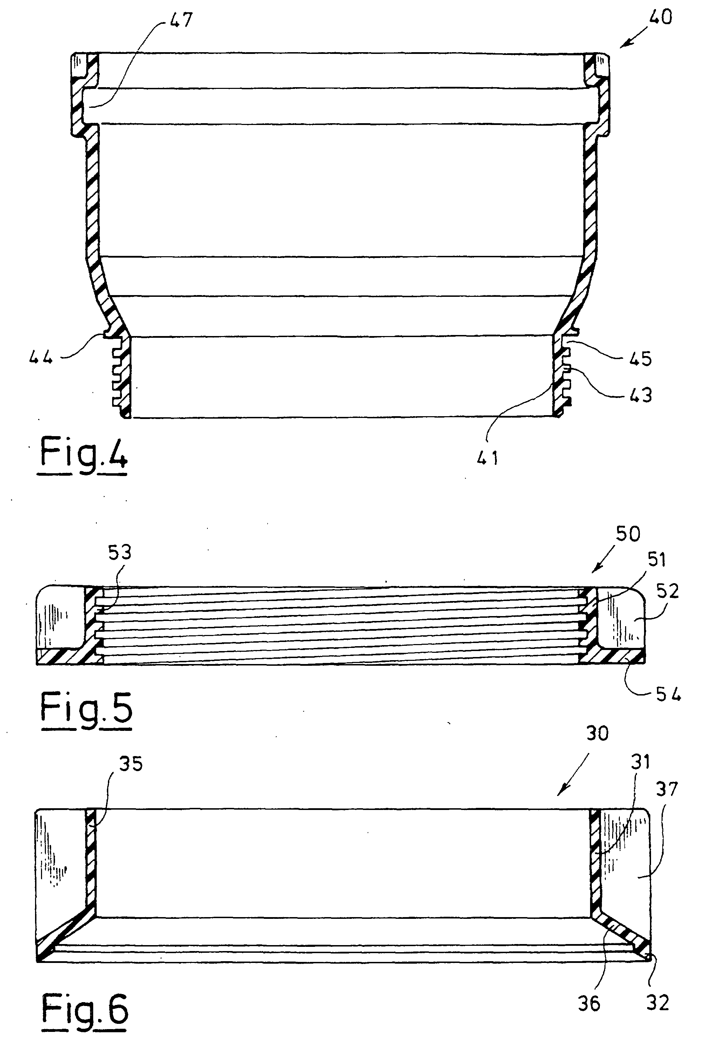

In Fig. 4 ist der Abzweigstutzen 40 gezeigt. Er besteht aus einem kelchförmigen Abzweigrohr 41.

In das Abzweigrohr 41 ist eine umlaufende Anschlußringkammer 47 eingebracht. An dem dieser gegenüberliegenden Ende ist eine Dichtungskammer 45 angeordnet, in der ein Anschlußdichtungsring 48 angeordnet ist (vgl. Fig. 1). Unter der Dichtungskammer 45 ist ein Einschraubaußengewinde 43 angeordnet.

Der Spannring 50 ist in Fig. 5 gezeigt. Der Spannring 50 weist einen Ring 51 auf. An diesen Ring sind beabstandet untereinander Spannschlüsselausnehmungen oder -stege 52 angeordnet. In der Innenseite des Spannrings 51 ist ein Innengewinde 53 eingebracht. Der Ring 51 schließt dann mit einem ringförmig umlaufenden Abstützflansch 54 ab. Dieser ist im wesentlichen rechtwinklig gegenüber dem Spannring 51 nach außen hin zeigend abgewinkelt.

In Fig. 6 ist der Auflagering 30 dargestellt. Er besteht aus einem Auflagerohrring 31, an den sich ein Auflageflansch 32 anschließt. Der Auflageflansch 32 ist der Kontur der Kanalrohraußenfläche 12 im Bereich der Abzweigöffnung 14 angepaßt. Zwischen dem Auflagerohrring 31 und dem Auflageflansch 32 sind beabstandet untereinander Verstärkungsrippen angeordnet. An der Unterseite des Auflageflansches 32 ist eine Dichtungsaufnahmeausnehmung 36 eingebracht, in die ein Auflagedichtungsring 34 einlegbar ist. Dem Auflageflansch 32 liegt ein im wesentlichen ringförmig ausgebildeter Aufstützring 35 gegenüber. Zwischen dem Auflageflansch 32 und Abstützring sind auf dem Auflagerohrring 31 beabstandet untereinander Abstützstege 37 angeordnet.

Das Anschlußstück 20, der Auflagering 30, der Abzweigstutzen 40 und der Spannring 50 des verschraubbaren Abzweigs 2 sind aus Kunststoff hergestellt.

Das Einsetzen und Montieren des verschraubbaren Abzweigs für ein dichtschließendes Verbinden eines dünnwandigen Kanalrohrs mit einem Anschlußrohr wird anhand der Figuren 1 bis 7 erläutert:

In die Kanalrohrwand 11 des dünnwandigen Kanalrohrs 1 wird, wie Fig. 2 zeigt, die Abzweigöffnung 14 eingebracht. Bei dem Kanalrohr kann es sich um ein Kunststoff-, Steinzeug-, Eisenrohr oder ein anderes dünnwandiges Rohr aus einem beliebigen anderen Material handeln. Die Abzweigöffnung 14 wird mit Hilfe eines Spezialwerkzeugs mit einem bestimmten Kanalrohr-Öffnungsdurchmesser OD eingebracht, der unter Berücksichtigung der übrigen Abmaße des Abzweigstutzens das Einsetzen eines Anschlußrohr einer genormten Nennweite gestattet.

Ist die Abzweigöffnung 14 geschaffen, wird auf das Anschlußstück 20 ein Ringdichtungselement 24 geschoben. Das Ringdichtungselement 24 legt sich mit seiner Innenwandlippe 24.1 auf den Außenflansch 22 und mit seiner Öffnungswandlippe 24.2 gegen das Anschlußstutzenrohr 21. Danach wird der so vorbereitete Anschlußstutzen mit beiden Händen soweit zusammengedrückt, daß er sich quer in die Abzweigöffnung 14 einführen läßt. Das ist möglich, weil die Höhe des Anschlußstutzens kleiner ist als der Kammerrohr-Öffnungsdurchmesser OD ist. Durch ein Hochziehen aus der Abzweigöffnung 14 legt sich insbesondere die Öffnungswand 24.2 an die Öffnungsfläche 15 der Abzweigöffnung 14 und hält damit den Anschlußstutzen 20 locker in der Abzweigöffnung 14.

Über den so gehaltenen Anschlußstutzen 20 wird der Auflagering 30 mit dem Auflageflansch 32 mit dem eingelegten Auflagedichtungsring 34 voran geschoben und auf der Kanalrohraußenfläche 12 abgesetzt. Um das Absetzen zu erleichtern, können Anschlußstutzen 20 und Auflagering 30 jeweils eine Nut und einen Steg (nicht dargestellt) aufweisen.

Ist der Abstützring 30 richtig positioniert, wird der Spannring 50 mit dem Innengewinde 53 auf das Spanngewinde 25 des Anschlußrohrstutzens 20 geschraubt.

Je weiter das Innengewinde 53 gegenüber dem Spanngewinde 25 verschraubt wird, desto näher rückt der Aufstützflansch 54 dem Aufstützring 35. Damit stützt sich der Abzweigstutzen 40 gegenüber dem Auflagering 30 ab und zieht den Anschlußstutzen 20 weiter nach oben. Gleichzeitig wird mit Hilfe des Außenflansches 22 die Innenwandlippe 24.1 des Ringdichtungselements 24 gegen die Kanalrohrinnenfläche 13 und der Auflagedichtungsring 34 im Auflageflansch 32 auf die Kanalrohraußenfläche 12 gedrückt.

Dieser Schraubvorgang mit Hilfe eines Spannschlüssels, der an die Spannstege 52 angelegt wird, wird dann beendet, wenn eine flüssigkeitsdichte Verbindung der Dichtungen 34 und 24 hergestellt ist.

Anschließend wird das Einschraubaußengewinde 43 des Abzweigstutzens 40 in das Stutzenrohrgewinde 23 des Anschlagstutzens 20 eingeschraubt. Mit dem Beginn des Schraubvorgangs entsteht eine erste kraftschlüssige Verbindung zwischen Anschlußstück 20 und Abzweigstutzen 40. Beim Schraubvorgang gleitet der in die Anschlußringkammer 47 eingelegte Anschlußring 48 auf der Innenfläche des Anschlußstutzenrohrs 21. Durch ein Einfetten des Anschlußdichtungsrings 48 wird der Schraubvorgang erleichtert. Ein umlaufender Anschlagringsteg 44 (vgl. Fig. 4) erleichtert das Einschrauben bis zu einer vorgegebenen Tiefe.

Danach wird der Spannschlüssel abgenommen, in die Anschlußringkammer 47 eine Lippendichtung (nicht dargestellt) eingelegt und danach das Anschlußrohr (ebenfalls nicht dargestellt) eingeschoben.

Der besondere Vorteil des so ausgebildeten verschraubbaren Abzweigs 2 besteht darin, daß er mit gleichen Teilen in Kanalrohr 1 mit unterschiedlichen Kanalrohrwanddicken d eingesetzbar ist. Verringert sich die Kanalrohrwanddicke d, wie Fig. 7 zeigt, wird das Anschlußstutzenrohr 21 des Anschlußstücks 20 weiter in den Spannring 50 hineingezogen. Ein weiterer sehr wesentlicher Vorteil besteht darin, daß der Abzweigstutzen 40 für Anschlußrohre gleichen Querschnitts immer gleich ausgebildet werden kann. Den jeweiligen Kanalrohren 1 sind jeweils das Anschlußstück 20 und der Auflagering 30 anzupassen. Hierbei handelt es sich aber um übliche Rohrstücke, deren Enden entsprechend zugeschnitten und mit einem entsprechenden Flansch zu versehen sind.

## Patentansprüche

1. Vorrichtung zum dichtschließenden Verbinden eines Kanalrohres mit einem Anschlußrohr, in das eine Abzweigöffnung (14) einzubringen ist, die aufweist,
- ein Innenteil (20) mit
wenigstens einem Gewinde (23, 25) und
einem in das Kanalrohr (1) ragenden umlaufenden Bund (22),
wobei das Innenteil (20) mit dem Bund (22) voran in der Abzweigöffnung (14) zu positionieren ist
- einen Auflagering (30) mit einem einer Kontur einer Kanalrohraußenfläche (12) angepaßten Auflageflansch (32),
- ein Einsatzstück (40, 50) mit
einem seiner auf Außenfläche wenigstens teilweise angeordnetenen Einschraubaußengewinde (43) und
einem Spannkranz (50), das wenigstens teilweise in das Innenteil (20) einzuschrauben ist, und
- ein Ringdichtungselement (24), das von dem Auflageflansch (32) des Auflagerings (30) und dem umlaulenden Bund (22) wenigstens teilweise gegen eine Kanalrohrinnenfläche (13) und wenigstens teilweise gegen eine Öffnungsfäche (15) der Abzweigöffnung (14) gedrückt ist,
**dadurch gekennzeichnet,**
- **daß** das Innenteil ein einteiliger Anschlußstutzen (20) mit einem Anschlußstutzenrohr (21) ist, in dem wenigstens teilweise ein Stutzenrohrgewinde (23) und auf dem wenigstens teilweise ein Spanngewinde (25) als Gewinde angeordnet ist, an dem der Bund als ein zu einer Innenwandkontur (16) der Abzweigöffnung (14) an der Kanalrohrinnenfläche (13) kompatibel umlaufender Außenflansch (22) angeordnet ist und mit einer derartigen Stutzenwanddicke (Sd) ausgeführt ist, daß der Anschlußstutzen (20) zusammen zu drücken und in die Abzweigöffnung (14) zu schieben ist,
- **daß** das Einsatzstück als
ein Abzweigstutzen (40) mit einem Abzweigrohr (41), an dem das Einschraubaußengewinde (43) wenigstens teilweise angeordnet ist, und
ein Spannring (50) mit einem Ring (51)
als der Spannkranz ausgebildet ist, in dem wenigstens teilweise ein Innengewinde (53) und an dem abschließend ein umlaufender Aufstützflansch (54) angeordnet ist,
- wobei der Aufstützflansch (54) auf einen dem Auflageflansch (32) gegenüberliegenden Aufstützring (35) des Auflagerings (30) zu legen und das dem Außenflansch (22) entgengesetzt liegende Ende des Anschlußstutzens (20) durch ein Verdrehen des Innengewindes (53) auf dem Stutzenrohrgewinde (23) hoch zu ziehen und das Ringdichtungselement (24) mit dem Außenflansch (22) abdichtend festzulegen ist und
- wobei der Abzweigstutzen (40) durch ein Eindrehen des Einschraubgewindes (44) in dem Stutzenrohrgewinde (23) in dem Anschlußstutzen (20) festzulegen ist

2. Vorrichtung nach Anspruch 1, **dadurch gekennzeichnet, daß** das Abzweigrohr (41) mit einer wenigstens teilweise umlaufenden Dichtungskammer (45) versehen ist, in der ein Anschlußdichtungsring (48) angeordnet ist.

3. Vorrichtung nach Anspruch 1 oder 2, **dadurch gekennzeichnet, daß** der Auflageflansch (32) des Auflagerings (30) wenigstens teilweise mit einer Dichtungsaufnahmeausnehmung (36) versehen ist, in die ein Auflagedichtungsring (34) einzulegen ist.

4. Vorrichtung nach einem der Ansprüche 1 bis 3, **dadurch gekennzeichnet, daß** der Spannring (50) mit wenigstens einer Spannschlüsselausnehmung oder einem Spannsteg (52) versehen ist.

5. Vorrichtung nach einem der Ansprüche 1 bis 4, **dadurch gekennzeichnet, daß** die Spannstege (52) beabstandet untereinander über dem Abstützflansch (54) angeordnet sind.

6. Vorrichtung nach einem der vorhergehenden Ansprüche, **dadurch gekennzeichnet, daß** der Abzweigstutzen (40) einteilig ausgebildet ist.

7. Vorrichtung nach einem der vorhergehenden Ansprüche, **dadurch gekennzeichnet, daß** die Stutzenwanddicke (Sd) zwischen 1 mm und 4 mm beträgt.

8. Vorrichtung nach einem der vorhergehenden Ansprüche, **dadurch gekennzeichnet, daß** der Anschlußrohrstutzen (20), der Auflagering (30), der Abzweigstutzen (40) und der Spannring (50) aus Polyvinylchlorid (PVC) und/oder einem anderen Kunststoff besteht.

## Claims

1. A device for sealing-tight connection of a sewer pipe to a connecting pipe in which a branch opening (14) is formed, the device comprising:
- an inner part (20) having at least one screwthread (23, 25) and a peripheral collar (22) projecting into the sewer pipe (1), wherein the inner part (20) is positioned in the branch opening (14) with the collar (22) in front,
- a bearing ring (30) having a bearing flange (32) adapted to a contour of an outer surface (12) of the sewer pipe,
- an insert member (40, 50) with a screw-in outer thread (43) on at least part of its outer surface and a tightening rim (50), the bearing ring being screwed at least partly into the inner part (20) and
- an annular sealing element (24) which, via the flange (32) on the bearing ring (30) and the peripheral collar (22), is pressed at least partly against an inner surface (13) of the sewer pipe and at least partly against a surface (15) of the branch opening (14),
**characterised in that**
- the inner part is a one-piece connecting stub (20) comprising a pipe (21) in which a screwthread (23) is at least partly disposed and on which a tightening screwthread (25) is at least partly disposed, the collar, constituting a peripheral outer flange (22) on the inner surface (13) of the sewer pipe compatible with an inner wall contour (16) of the branch opening (14) being disposed on the inner part (20), which has a wall thickness (Sd) such that the connecting stub (20) can be compressed and pushed into the branch opening (14),
- the insert member is in the form of a branch stub (40) comprising a branch pipe (41) on which the screwing-in outer thread (43) is at least partly disposed and a tightening ring (50) comprising a ring (51) forms the tightening rim, in which an inner screwthread (53) is at least partly disposed and on which a terminal peripheral supporting flange (54) is disposed,
- wherein the support flange (54) is placed on a support ring (35) of the bearing ring (30) opposite the bearing flange (32), and the end of the connecting stub (20) opposite the outer flange (22) is pulled up by rotating the inner screwthread (53) on the thread (23) and the annular sealing element (24) is secured and sealed by the outer flange (22), and
- wherein the branch stub (40) is secured in the connecting stub (20) by screwing the thread (44) into the thread (23).

2. A device according to claim 1, **characterised in that** the branch pipe (41) is provided with an at least partly peripheral sealing chamber (45) in which a connecting sealing ring (48) is disposed.

3. A device according to claim 1 or 2, **characterised in that** the bearing flange (32) of the bearing ring (30) is provided at least partly with a seal-receiving recess (36) into which a bearing sealing ring (34) is inserted.

4. A device according to any of claims 1 to 3, **characterised in that** the tightening ring (50) is provided with at least one recess or web (52) for a tightening key.

5. A device according to any of claims 1 to 4, **characterised in that** the tightening webs (52) are spaced apart over the supporting flange (54).

6. A device according to any of the preceding claims, **characterised in that** the branch stub (40) is in one piece.

7. A device according to any of the preceding claims, **characterised in that** the wall thickness (Sd) of the stub is between 1 mm and 4 mm.

8. A device according to any of the preceding claims, **characterised in that** the connecting pipe stub (20), the bearing ring (30), the branch stub (40) and the tightening ring (50) are made of polyvinyl chloride (PVC) and/or another plastic.

## Revendications

1. Dispositif de connexion hermétique d'un tuyau d'eaux vannes avec un tuyau de raccordement, dans lequel une ouverture de dérivation (14) doit être introduite, qui comprend:
- une partie interne (20) comportant
au moins un filetage (23, 25) et une collerette périphérique (22) qui fait saillie dans le tuyau d'eaux vannes (1), la partie interne (20) devant être positionnée dans l'ouverture de dérivation (14) de façon que sa collerette (22) soit en avant,
- une bague d'appui (30) à bride d'appui (32) adaptée à un contour d'une surface externe (12) du tuyau d'eaux vannes,
- un insert (40, 50) qui comporte
un filetage externe (43) à insérer par vissage, agencé au moins en partie sur une surface externe, et une couronne de serrage (50) qui doit être au moins partiellement vissée dans la partie interne (20), et
- un élément annulaire d'étanchéité (24) qui est poussé par la bride d'appui (32) de la bague d'appui (30) et par la collerette périphérique (22) au moins partiellement contre une surface interne (13) du tuyau d'eaux vannes et au moins partiellement contre une surface (15) d'ouverture de l'ouverture de dérivation (14),
**caractérisé**
- **en ce que** l'élément interne est un piquage de raccordement (20) d'un seul tenant comportant un tuyau (21) de piquage de raccordement, où sont agencés comme filetages au moins un filetage (23) de tuyau de piquage formé à l'intérieur et au moins un filetage de serrage (25) formé à l'extérieur, sur lequel la collerette est agencée sous forme d'une bride externe périphérique (22) compatible avec un contour (16) de paroi interne de l'ouverture de dérivation (14) ménagée dans la surface interne (13) du tuyau d'eaux vannes, et dont l'épaisseur de paroi (Sd) de piquage est telle que le piquage de raccordement (20) doit être simultanément poussé et glissé dans l'ouverture de dérivation (14),
- **en ce que** l'insert consiste en
un piquage de dérivation (40) comportant un tuyau de dérivation (41) sur lequel le filetage (43) à insérer par vissage est agencé au moins partiellement, et en
une bague de serrage (50) qui intervient comme couronne de serrage et comprend une bague (51) qui comporte un filetage interne (53) au moins partiel et se termine par une bride d'appui périphérique (54) qui s'y raccorde,
- **en ce qu'**il faut placer la bride de support (54) sur une bague de support (35) de la bague d'appui (30) qui fait face à la bride d'appui (32), lever par rotation du filetage interne (53) sur le filetage (23) du tuyau de piquage l'extrémité du piquage de raccordement (20) opposée à la bride externe (22) et fixer de façon étanche à la bride externe (22) l'élément annulaire d'étanchéité (24), et
- **en ce qu'**il faut fixer le piquage de dérivation (40) dans le piquage de raccordement (20) en insérant par rotation le filetage (44) à visser dans le filetage (23) de tuyau de piquage.

2. Dispositif selon la revendication 1, **caractérisé en ce que** le tuyau de dérivation (41) comporte une chambre d'étanchéité au moins partiellement périphérique (45) dans laquelle est agencée une bague d'étanchéité (48) de raccordement.

3. Dispositif selon la revendication 1 ou 2, **caractérisé en ce que** la bride d'appui (32) de la bague d'appui (30) comporte au moins partiellement un évidement (36) de réception de joint d'étanchéité dans lequel une bague d'étanchéité d'appui (34) doit être logée.

4. Dispositif selon l'une quelconque des revendications 1 à 3, **caractérisé en ce que** la bague de serrage (50) comporte au moins un évidement de clé de serrage ou une nervure de serrage (52).

5. Dispositif selon l'une quelconque des revendications précédentes, **caractérisé en ce que** les nervures de serrage (52) sont agencées à distance l'une de l'autre sur la bride de support (54).

6. Dispositif selon l'une quelconque des revendications précédentes, **caractérisé en ce que** le piquage de dérivation (40) est d'un seul tenant.

7. Dispositif selon l'une quelconque des revendications précédentes, **caractérisé en ce que** l'épaisseur de paroi (Sd) du piquage est comprise entre 1 mm et 4 mm.

8. Dispositif selon l'une quelconque des revendications précédentes, **caractérisé en ce que** le piquage (20) de tuyau de raccordement, la bague d'appui (30), le piquetage de dérivation (40) et la bague de serrage (50) sont en chlorure de polyvinyle (PVC) ou en une autre matière plastique.
